# EUROPÄISCHE PATENTANMELDUNG

(11) **EP 1 099 881 A2**
(43) Veröffentlichungstag der Anmeldung: **16.05.2001**
(21) Anmeldenummer: 00250358.9
(22) Anmeldetag: 26.10.2000
(51) Int. Cl.: F16H 57/02

(54) **Drehmomentstütze und Verfahren zu seiner Herstellung**

(30) Priorität: 12.11.1999 DE 19956309
(71) Anmelder: Atecs Mannesmann AG, 40213 Düsseldorf (DE)
(72) Erfinder: Schulze, Jürgen, 44319 Dortmund (DE); Storm, Frank, 58313 Herdecke (DE)
(74) Vertreter: Meissner, Peter E., Dipl.-Ing.

(57) **Zusammenfassung**

Die Erfindung betrifft eine Drehmomentstütze und ein Verfahren zu seiner Herstellung zum drehfesten Verbinden eines im Gießverfahren hergestellten Metallgetriebegehäuses und eines Fahrwerks mit mindestens einem drehgelagerten Laufrad, insbesondere einer Einschienenkatze, mit zwei stufenförmig zueinander versetzten, mittels eines Verbindungselements miteinander verbundenen und je eine Anschlußfläche aufweisenden Anschlußplatten. Um eine Drehmomentstütze vorzuschlagen, die konstruktiv einfach aufgebaut und mit geringem Aufwand kostengünstig herstellbar ist sowie hohe Impulsspitzen sicher abfängt, wird vorgeschlagen, dass in der am Metallgetriebegehäuse befestigbaren Anschlußplatte (2) eine Durchgangsöffnung (3) mit einer Innenverzahnung (4) angeordnet ist, in die eine komplementäre Außenverzahnung eines am Metallgetriebegehäuse angeformten zylindrischen Vorsprungs (11) einsteckbar ist, wobei eine spielfreie Anlage in beiden Drehrichtungen jeweils an mindestens einer Zahnflanke der ineinandergreifenden Verzahnungen dadurch sichergestellt ist, dass die Innenverzahnung (4) jeweils als komplementäre Kopie eines gegossenen Vorsprungs mittels eines Lasers in die Anschlußplatte (2) hineingeschnitten ist und die Formschrägen durch den Laseraustrittswinkel nachgebildet sind.

## Beschreibung

Die Erfindung betrifft eine Drehmomentstütze und ein Verfahren zu seiner Herstellung gemäß den Oberbegriffen der Ansprüche 1 und 10.

Aus der DE 36 27 358 A1 ist eine aus einem stufenförmig gebogenen Blech gebildete Drehmomentstütze bekannt, welche zwei stufenförmig zueinander versetzte Anschlussplatten mit jeweils einer Anschlussfläche aufweist. Diese beiden Anschlussplatten sind mittels eines quer zu diesen verlaufenden Stegs miteinander verbunden. Die Drehmomentstütze ist zwischen einem Getriebe und einem Motor angeordnet und mittels Schrauben kraftschlüssig mit beiden drehfest verbunden.

Der Nachteil einer derartigen Drehmomentstütze besteht darin, dass die Befestigung der Anschlussplatten mittels Schrauben nicht in der Lage ist, kurzzeitig auftretende Drehmomentspitzen bzw. Impulsspitzen elastisch abzufangen, d.h. die Drehmomentstütze verrutscht und verdreht sich an der Befestigungsstelle. Derartige Impulsspitzen treten an der Drehmomentstütze beispielsweise bei Notabbremsungen des Fahrwerks auf.

Aus der DE 40 25 505 A1 ist darüber hinaus ein Getriebegehäuse aus Kunststoffspritzguss bekannt, das einen angeformten Vorsprung mit einer Außenverzahnung mit Formschrägen aufweist. Die Abtriebswelle des Getriebes führt durch eine als Drehmomentstütze dienende Steckverzahnung des Getriebegehäuses zu dem anzutreibendem Teil. Das anzutreibende Teil kann aus Kunststoff oder Metall bestehen und weist eine in etwa komplementäre Innenverzahnung auf. Der Kunststoffspritzguss ist derart elastisch, dass eine form- und kraftschlüssige Verbindung leicht durch Aufpressen des anzutreibenden Teils auf den Vorsprung hergestellt werden kann, auch wenn die beiden Verzahnungen nicht einwandfrei komplementär zueinander ausgebildet sind. Der Kunststoff verfügt über eine erhöhte Elastizität bzw. Nachgiebigkeit, die zur Sicherstellung eines Form- und Kraftschlusses bei der Montage zwingend erforderlich ist, da die Drehmomentstütze mit der Innenverzahnung auf die Außenverzahnung aufgepresst wird.

Die aus der DE 40 21 054 C2 bekannte elastische Drehmomentstütze weist einen Flansch mit Bohrungen für Schrauben auf, mit denen die Drehmomentstütze an einem Fahrwerk befestigbar ist. Die Befestigung am Getriebegehäuse erfolgt dabei, indem eine parallel zu den Bohrungen verlaufende Durchgangsöffnung mit einer Innenverzahnung auf eine Außenverzahnung eines vorsprungartigen Ringansatzes des Getriebegehäuses aufgesteckt wird. Die in einem Kunststoff-Außenring ausgebildete Innenverzahnung ist mittels eines Spannbandes gegen die Außenverzahnung andrückbar, wodurch zwischen beiden ein sicherer Kraftschluß hergestellt wird.

Nachteilig bei dieser Drehmomentstütze ist deren relativ aufwendige Herstellung. Darüber hinaus ist sie nicht relativ einfach an unterschiedliche Ringansätze anpaßbar. Insbesondere ist es bei dieser Drehmomentspitze nicht mit geringem Aufwand möglich, die durch Verschleiß der Gießform verursachten Maßänderungen des Ringansatzes ohne größeren Aufwand bei der Herstellung zu berücksichtigen.

Die Aufgabe der Erfindung ist es, eine Drehmomentstütze und ein Verfahren zu seiner Herstellung vorzuschlagen, die konstruktiv einfach aufgebaut und mit geringem Aufwand kostengünstig herstellbar ist. Insbesondere soll die Drehmomentstütze eine feste Verbindung mit dem Getriebegehäuse ermöglichen, wobei auch hohe Impulsspitzen elastisch abgefangen werden sollen.

Die Lösung dieser Aufgabe ist die Drehmomentstütze betreffend durch die im Anspruch 1 und das Verfahren betreffend durch die im Anspruch 10 angegebenen Merkmale gegeben. Die Merkmale der Unteransprüche beschreiben vorteilhafte Ausgestaltungen der Drehmomentstütze.

Die Lösung für die Drehmomentstütze sieht vor, dass in der am Metallgetriebegehäuse befestigbaren Anschlußplatte senkrecht zu ihrer Anschlußfläche eine Durchgangsöffnung mit einer Innenverzahnung mit Formschrägen angeordnet ist, durch welche die Getriebeausgangswelle hindurchgeführt ist und in die eine Formschrägen aufweisende komplementäre Außenverzahnung eines am Metallgetriebegehäuse angeformten zylindrischen Vorsprungs einsteckbar ist, wobei eine spielfreie Anlage in beiden Drehrichtungen jeweils an mindestens einer Zahnflanke der ineinandergreifenden Verzahnungen dadurch sichergestellt ist, dass die Innenverzahnung jeweils als komplementäre Kopie eines gegossenen Vorsprungs mittels eines Lasers in die Anschlußplatte hineingeschnitten ist und die Formschrägen durch den Laseraustrittswinkel nachgebildet sind. Die Drehmomentstütze wird also wie üblich - beispielsweise mittels Schrauben als Befestigungselemente - mit den Anschlußflächen jeweils am Getriebegehäuse und am Fahrwerk festgeschraubt. Zusätzlich bewirken die ineinandergesteckten Verzahnungen einen sehr guten Formschluß, der bei auftretenden Impulsspitzen bewirkt, dass die Elastizität der Drehmomentstütze bei Impulsartigen Stößen wirksam werden kann, da die reibschlüssige Verbindung der Drehmomentstütze mit dem Getriebegehäuse erfahrungsgemäß nicht ausreicht, um die Drehmomentstütze in einem solchen Falle am Getriebe festzuhalten. Die Elastizität ergibt sich aufgrund der stufigen bzw. gekröpften Ausführung, die zudem einfach herstellbar ist.

Herstellungstechnisch einfach ist es, wenn die Innenverzahnung programmgesteuert in die Anschlußplatte hineingeschnitten ist. Vorteilhafterweise sind die Daten zur Programmsteuerung des Schneidvorgangs hierbei in einer Datei eines entsprechenden Konstruktionsprogramms (AUTOCAD) abgelegt. Die Daten zur Erzeugung einer Innenverzahnung, die eine komplementäre 1:1 Kopie des Vorsprungs darstellt, werden insbesondere bei Gussformen vorteilhafterweise anhand einer Vermessung der Außenverzahnung des Vorsprungs erstellt. Die Vermessung ermöglicht mit geringem Aufwand eine Innenverzahnung herzustellen, bei der eine spielfreie Anlage in beiden Drehrichtungen jeweils an mindestens einer Zahnflanke der ineinandergreifenden Verzahnungen erfolgt. Kostengünstig und mit hoher Produktivität ist eine solche Innenverzahnung mittels des Laserschneidverfahrens herstellbar.

Zur Sicherstellung einer ausreichenden Elastizität wird vorgeschlagen, dass die am Getriebegehäuse befestigte Anschlußplatte mindestens das Vierfache der Länge der mit dem Fahrwerk verbundenen Anschlußplatte beträgt und dass die Drehmomentstütze jeweils im Bereich der Anschlussplattenenden mit dem Getriebegehäuse und dem Fahrwerk drehfest verbunden ist.

Eine kostengünstige Drehmomentstütze erhält man, wenn diese ein stufenförmig gebogenes Blech ist. Dieses weist bei entsprechender Dimensionierung trotz konstruktiv einfacher Ausführung ein elastisches Verhalten auf, welches Drehmomentspitzen wirksam abfangen kann.

Die Wirksamkeit der Drehmomentstütze beim Abfangen von Drehmomentspitzen wird erhöht, wenn die Getriebeausgangswelle durch den ringförmigen Vorsprung hindurchgeführt ist. Hierbei erfolgt eine gleichmäßige Aufnahme der Kräfte durch die Befestigungsmittel als auch durch die Innenverzahnung.

Die Drehmomentstütze ist besonders für die Einsatzfälle geeignet, bei denen das Getriebegehäuse oder der Teil des Getriebegehäuses mit dem angeformten Vorsprung ein Gussteil ist, da hier eine einfache Anpassung ihrer Innenverzahnung an die Außenverzahnung des Vorsprunges vornehmbar ist. Das Getriebegehäuse kann hierbei selbstverständlich auch aus mehreren Gussteilen gebildet sein.

Bei einem Guteilgehäuse ist es von Vorteil, die Formschrägen des Getriebegehäuses beim Laserschneidverfahren durch einen entsprechenden Laseraustrittswinkel nachzubilden.

Die Abnutzung der Gießform lässt sich bei der Herstellung der Drehmomentstütze dadurch berücksichtigen, dass nach einer vorliegenden Stückzahl eine Korrektur oder Anpassung der Daten erfolgt, so dass die Außenverzahnung der Durchgangsöffnung jeweils dieselben Änderungen aufweist. Hierzu kann ein einfacher Korrekturfaktor für Datenanpassung verwendet werden, der die Gießformabnutzung beschreibt.

Um die Befestigung der Drehmomentstütze am Fahrwerk zu vereinfachen, wird vorgeschlagen, dass die am Fahrwerk befestigte Anschlußplatte mit sich in Längsrichtung der Drehmomentstütze erstreckenden Langlöchern versehen ist. Auf diese Weise kann das Stichmaß der Drehmomentstütze in einem vorgegebenen Bereich variieren.

Die Lösung für die Drehmomentstütze sieht vor, dass ein Blech stufenförmig geformt und mit Durchgangsbohrungen für die Befestigungselemente versehen wird, dass in die am Metallgetriebegehäuse zu befestigende Anschlußplatte senkrecht zu ihrer Anschlußfläche eine Durchgangsöffnung, durch die die Getriebeausgangswelle hindurchgeführt ist, mit einer Innenverzahnung mit Formschrägen als komplementäre Kopie eines eine Außenverzahnung mit Formschrägen aufweisenden, am Metallgetriebegehäuse angeformten zylindrischen Vorsprungs mittels eines Lasers so hineingeschnitten wird und die Formschrägen durch den Laseraustrittswinkel so nachgebildet werden, dass nach Einstecken des Vorsprungs eine spielfreie Anlage in beiden Drehrichtungen jeweils an mindestens einer Zahnflanke der ineinandergreifenden Verzahnungen sichergestellt ist, wobei die Außenverzahnung eines einzelnen Vorsprungs vorher vermessen und der Laser anhand dieser Vermessung während des Schneidvorgangs geführt wird.

Ein Ausführungsbeispiel der Erfindung ist in der Zeichnung dargestellt und wird nachfolgend näher beschrieben. Es zeigen:
- Fig. 1: zwei Ansichten einer Drehmomentstütze und
- Fig. 2: die Drehmomentstütze gemäß Fig. 1 vor dem Aufstecken auf den Vorsprung eines Metallgussgetriebegehäuses in einer dreidimensionalen Darstellung.

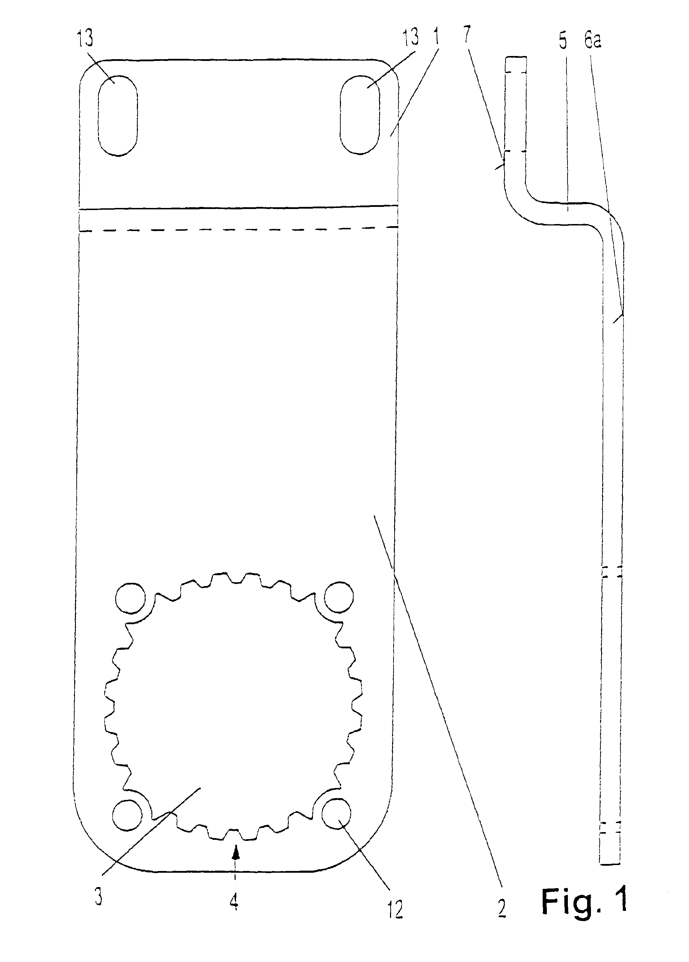

Fig. 1 zeigt eine Drehmomentstütze in einer Vorder- und Seitenansicht, die aus einem stufenförmig Blech gebogen ist. Die Drehmomentstütze besteht aus zwei flachen Anschlußplatten 1, 2, von denen die deutlich längere Anschlußplatte 2 eine Durchgangsöffnung 3 mit einer Innenverzahnung 4 aufweist. Diese Anschlußplatte 2 ist hierbei etwa viermal so lang wie die Anschlußplatte 1. Die Durchgangsöffnung verläuft senkrecht zur Anschlußplatte 2.

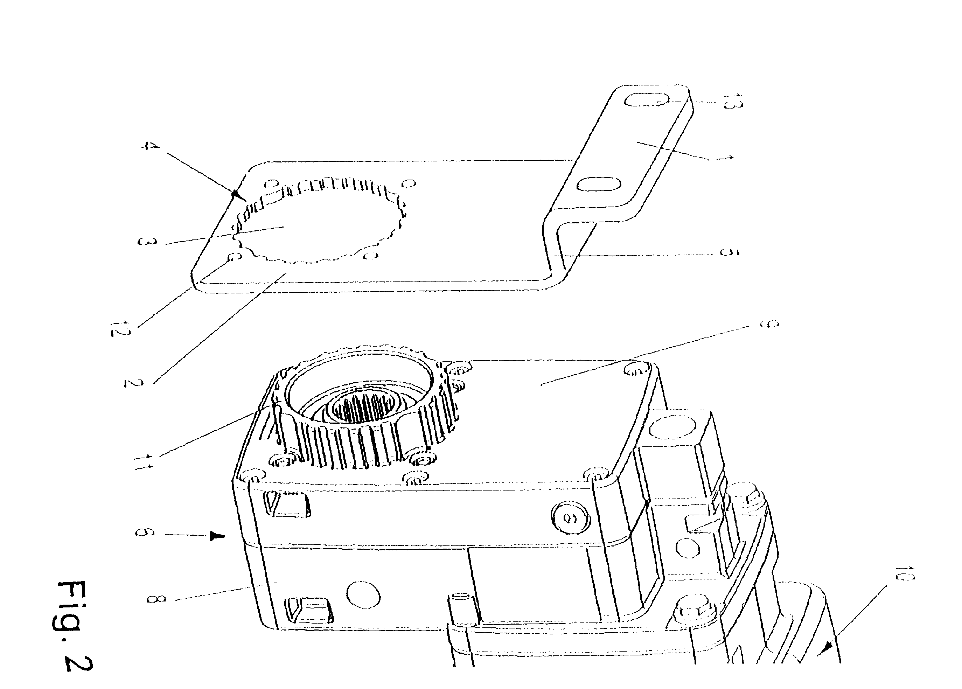

Die beiden Anschlußplatten 1, 2 sind versetzt zueinander angeordnet und liegen im Ausführungsbeispiel in zwei voneinander beabstandeten parallelen Ebenen. Verbunden sind die beiden Anschlußplatten 1, 2 über einen Steg als plattenförmiges Verbindungselement 5. Zum Anschluss an ein im Druck hergestelltes Metallgussgetriebegehäuse 6 (s. Fig. 2) und ein Fahrwerk sind die beiden einander abgewandten ebenen Anschlußflächen 6a und 7 vorgesehen.

Fig. 2 zeigt die Drehmomentstütze vor dem Aufstecken auf das Metallgussgetriebegehäuse 6, das im Ausführungsbeispiel aus zwei Metallgusshälften 8, 9 besteht. An dem Getriebegehäuse ist ein Antriebsmotor 10 angeflanscht. Der Durchgangsöffnung 3 gegenüberliegend ist in Fig. 2 ein gegossener Vorsprung 11 mit einer Außenverzahnung zu sehen, die komplementär zur Innenverzahnung 4 der Drehmomentstütze ausgebildet ist. Die Außenverzahnung weist Formschrägen auf, d.h. der Vorsprung 11 ist etwas konisch und folglich nur näherungsweise zylindrisch, um die Gießform leichter abziehen zu können.

Die Innenverzahnung 4 ist mittels eines Lasers programmgesteuert in die Anschlußplatte 2 jeweils als komplementäre Kopie der Außenverzahnung hineingeschnitten. Die den zeitlichen Ablauf des Schneidvorgangs bestimmende Programmsteuerung verwendet hierzu die in einer Datei abgelegten Messdaten, die anhand einer Vermessung der Außenverzahnung eines einzelnen gegossenen Vorsprungs 11 erstellt werden.

Die Vermessung der Außenverzahnung dient dazu, anschließend eine komplementäre 1:1 Kopie der Außenkontur des Vorsprungs 11 herzustellen. Auf diese Weise ist es möglich, eine Innenverzahnung 4 in die Anschlußplatte 2 hineinzuschneiden, so dass die Anschlußplatte 2 formschlüssig auf den Vorsprung 11 aufsteckbar ist, wobei eine spielfreie Anlage in beiden Drehrichtungen jeweils an mindestens einer Zahnflanke der ineinandergreifenden Verzahnungen sichergestellt ist.

Die vier Bohrungen 12, welche im Ausführungsbeispiel konzentrisch um die Durchgangsöffnung 3 angeordnet sind, ermöglichen das Befestigen der Anschlußplatte 2 am Getriebegehäuse 9, z.B. mittels Schrauben als Befestigungselemente. Hierbei liegt die Anschlußfläche 6a im Bereich der Durchgangsbohrungen 12 an einer entsprechenden Anschlußfläche des Getriebegehäuses einen Reibschluss bildend fest an. Zweckmäßigerweise ist die Getriebeausgangswelle durch den ringförmig ausgebildeten Vorsprung 11 (s. Fig. 2) hindurchgeführt.

Zur Befestigung am Fahrwerk sind an der kürzeren Anschlußplatte 1 zwei Langlöcher 13 vorgesehen, die sich in Längsrichtung der Drehmomentstütze erstrecken. Mittels durch die Langlöcher 13 hindurchgesteckte Schrauben kann die Drehmomentstütze am Fahrwerk angeschraubt werden.

Die Drehmomentstütze ist hierbei jeweils im Bereich der Anschlußplattenenden mit dem Getriebegehäuse 6 und dem Fahrwerk drehfest verbunden (s. Fig. 2).

Die Verwendung des Laserschneidverfahrens ermöglicht es darüber hinaus, die bei einem gegossenen Getriebegehäuse 6 an der Außenverzahnung des Vorsprungs 11 vorhandenen Formschrägen durch eine entsprechende Einstellung des Laseraustrittswinkels auf einfache Art und Weise nachzubilden.

Außerdem ist es möglich, die Abnutzung der Gießform zu berücksichtigen, indem nach einer vorgegebenen Zahl gegossener Getriebegehäuse eine Korrektur der Daten der Drehmomentstütze erfolgt, in dem die Daten bzw. die Größe der Innenverzahnung 4 jeweils mit einem stückzahlabhängigen Korrekturfaktor multipliziert werden.

### Bezugszeichenliste

- 1: Anschlußplatte
- 2: Anschlußplatte
- 3: Durchgangsöffnung
- 4: Innenverzahnung
- 5: Verbindungselement
- 6: Metallgussgetriebegehäuse
- 6a: Anschlußfläche
- 7: Anschlußfläche
- 8: Metallgusshälfte
- 9: Metallgusshälfte
- 10: Antriebsmotor
- 11: Vorsprung
- 12: Bohrung
- 13: Langloch

## Patentansprüche

1. Drehmomentstütze zum drehfesten Verbinden eines im Gießverfahren hergestellten Metallgetriebegehäuses und eines Fahrwerks mit mindestens einem drehgelagerten Laufrad, insbesondere einer Einschienenkatze, mit zwei stufenförmig zueinander versetzten, mittels eines Verbindungselements miteinander verbundenen und je eine Anschlußfläche aufweisenden Anschlußplatten,
die mit ihren Anschlußflächen am Metallgetriebegehäuse und am Fahrwerk anliegend jeweils mittels Befestigungselementen kraftschlüssig befestigbar sind,
**dadurch gekennzeichnet,**
dass in der am Metallgetriebegehäuse (6) befestigbaren Anschlußplatte (2) senkrecht zu ihrer Anschlußfläche (6a) eine Durchgangsöffnung (3) mit einer Innenverzahnung (4) mit Formschrägen angeordnet ist,
durch welche die Getriebeausgangswelle hindurchgeführt ist und in die eine Formschrägen aufweisende komplementäre Außenverzahnung eines am Metallgetriebegehäuse (6) angeformten zylindrischen Vorsprungs (11) einsteckbar ist,
wobei eine spielfreie Anlage in beiden Drehrichtungen jeweils an mindestens einer Zahnflanke der ineinandergreifenden Verzahnungen dadurch sichergestellt ist,
dass die Innenverzahnung (4) jeweils als komplementäre Kopie eines gegossenen Vorsprungs (11) mittels eines Lasers in die Anschlußplatte (2) hineingeschnitten ist und die Formschrägen durch den Laseraustrittswinkel nachgebildet sind.

2. Drehmomentstütze nach Anspruch 1,
**dadurch gekennzeichnet,**
dass die komplementäre Kopie anhand einer Vermessung der Außenverzahnung eines einzelnen gegossenen Vorsprungs (11) erstellt ist.

3. Drehmomentstütze nach 1 oder 2,
**dadurch gekennzeichnet,**
dass die Messdaten zur Programmsteuerung des Schneidvorgangs in einer Datei abgelegt sind.

4. Drehmomentstütze nach 1 - 3,
**dadurch gekennzeichnet,**
dass die Durchgangsöffnung (3) mit der Innenverzahnung (4) programmgesteuert in die Anschlußplatte (1, 2) hineingeschnitten ist.

5. Drehmomentstütze nach einem der Ansprüche 1 - 4,
**dadurch gekennzeichnet,**
dass die am Getriebegehäuse (6) befestigte Anschlußplatte (2) mindestens das Vierfache der Länge der mit dem Fahrwerk verbundenen Anschlußplatte (1) beträgt und dass die Drehmomentstütze jeweils im Bereich der Anschlußplattenenden mit dem Getriebegehäuse (6) und dem Fahrwerk drehfest verbunden ist.

6. Drehmomentstütze nach einem der Ansprüche 1 - 5,
**dadurch gekennzeichnet,**
dass die Drehmomentstütze ein stufenförmig gebogenes Blech ist.

7. Drehmomentstütze nach einem der Ansprüche 1 - 6,
**dadurch gekennzeichnet,**
dass der Vorsprung (11) ringförmig und die Getriebeausgangswelle durch diesen hindurchgeführt ist.

8. Drehmomentstütze nach einem der Ansprüche 2 oder 3,
**dadurch gekennzeichnet,**
dass die Abnutzung der Gießform dadurch berücksichtigt wird, dass jeweils nach einer vorgegebenen Stückzahl eine entsprechende Korrektur der Messdaten erfolgt.

9. Drehmomentstütze nach einem der Ansprüche 1 - 8,
**dadurch gekennzeichnet,**
dass die am Fahrwerk befestigte Anschlußplatte (1, 2) mit sich in Längsrichtung der Drehmomentstütze erstreckenden Langlöchern (13) versehen ist.

10. Verfahren zur Herstellung einer Drehmomentstütze zum drehfesten Verbinden eines im Gießverfahren hergestellten Metallgetriebegehäuses (6) und eines Fahrwerks mit mindestens einem drehgelagerten Laufrad, insbesondere einer Einschienenkatze,
mit zwei stufenförmig zueinander versetzten, mittels eines Verbindungselements (5) miteinander verbundenen und je eine Anschlußfläche (6a, 7) aufweisenden Anschlußplatten (1, 2),
die mit ihren Anschlußflächen (6a, 7) am Metallgetriebegehäuse (6) und am Fahrwerk anliegend jeweils mittels Befestigungselementen kraftschlüssig befestigbar sind,
**dadurch gekennzeichnet,**
dass ein Blech stufenförmig geformt und mit Durchgangsbohrungen für die Befestigungselemente versehen wird,
dass in die am Metallgetriebegehäuse (6) zu befestigende Anschlußplatte (2) senkrecht zu ihrer Anschlußfläche (6a) eine Durchgangsöffnung (3), durch die die Getriebeausgangswelle hindurchgeführt ist, mit einer Innenverzahnung (4) mit Formschrägen als komplementäre Kopie eines eine Außenverzahnung mit Formschrägen aufweisenden, am Metallgetriebegehäuse (6) angeformten zylindrischen Vorsprungs (11) mittels eines Lasers so hineingeschnitten wird und die Formschrägen durch den Laseraustrittswinkel so nachgebildet werden, dass nach Einstecken des Vorsprungs (11) eine spielfreie Anlage in beiden Drehrichtungen jeweils an mindestens einer Zahnflanke der ineinandergreifenden Verzahnungen sichergestellt ist,
wobei die Außenverzahnung eines einzelnen Vorsprungs (11) vorher vermessen und der Laser anhand dieser Vermessung während des Schneidvorgangs geführt wird.
